# EUROPÄISCHE PATENTSCHRIFT

(11) **EP 1 486 285 B1**
(45) Veröffentlichungstag und Bekanntmachung des Hinweises auf die Patenterteilung: **04.07.2007**
(21) Anmeldenummer: 04012401.8
(22) Anmeldetag: 26.05.2004
(51) Int. Cl.: B23K 26/22, B23K 26/24, F16H 63/32

(54) **Laserschweissverfahren zur Herstellung eines Getriebeschaltelements aus Metall**
Method of laser welding for manufacturing a metallic gear shifting system
Méthode de soudage par laser pour fabriquer un système de sélection de vitesse

(30) Priorität: 14.06.2003 DE 10326870
(43) Veröffentlichungstag der Anmeldung: 15.12.2004
(73) Patentinhaber: FSG Automotive AG, 09376 Oelsnitz (DE)
(72) Erfinder: Kirschdorf, Dieter, 46282 Dorsten (DE)
(74) Vertreter: Linnemann, Winfried

(56) Entgegenhaltungen:
- DE-A- 10 045 506
- DE-A- 19 601 623
- FR-A- 2 761 426
- GB-A- 1 570 759
- PATENT ABSTRACTS OF JAPAN Bd. 008, Nr. 203 (M-326), 18. September 1984 (1984-09-18) & JP 59 092189 A (TOSHIBA KK), 28. Mai 1984 (1984-05-28)
- QUINTINO L ET AL: "LASER BEAM WELDING OF AUTOMOBILE HINGES" WELDING JOURNAL, AMERICAN WELDING SOCIETY. MIAMI, US, Bd. 80, Nr. 11, November 2001 (2001-11), Seiten 261-S, XP001133543 ISSN: 0043-2296

## Beschreibung

Die vorliegende Erfindung betrifft ein Verfahren zur Herstellung eines Getriebeschaltelements aus Metall, insbesondere für ein Direktschaltgetriebe eines Kraftfahrzeuges gemäß dem Oberbegriff des Anspruch 1 (siehe, z.B., DE 100 45 506 A1).

Bei einem aus der betrieblichen Praxis bekannten einschlägigen Verfahren erfolgt das Verbinden der Teile des Getriebeschaltelements miteinander durch CO₂-Schweißen. Dieses Verfahren hat verschiedene Nachteile. Die relativ große eingebrachte Wärmeenergie führt zu einem Wärmeverzug des Getriebeschaltelements, so daß ein mechanisches Richten nach dem Schweißvorgang erforderlich wird. Außerdem entstehen beim CO₂-Schweißen Schweißspritzer und-krater, die die Oberflächenqualität des Getriebeschaltelements beeinträchtigen und eine Oberflächennachbearbeitung erfordern. Durch Belastungsversuche eines mittels CO₂-Schweißens hergestellten Getriebeschaltelements hat sich zudem herausgestellt, daß die durch CO₂-Schweißen hergestellten Schweißnähte eine unsichere Dauerstandfestigkeit aufweisen. Diese Unsicherheit ist für ein Getriebeschaltelement, das im Laufe seiner Einsatzzeit in einem Schaltgetriebe einer sehr großen Zahl von Wechselbelastungen unterworfen wird, nicht hinnehmbar. Schließlich besteht ein Nachteil beim Einsatz des CO₂-Schweißens noch darin, daß gegebenenfalls am Getriebeschaltelement vorab angebrachte Klebeverbindungen durch den Hitzeeinfluß geschädigt oder sogar zerstört werden können. Solche Klebeverbindungen werden beispielsweise verwendet, um einen oder mehrere Magnete am Getriebeschaltelement zu befestigen, mit denen eine elektronische Positionsdetektion des Getriebeschaltelements durchgeführt werden kann. Um Schänden an solchen Klebeverbindungen auszuschließen, müssen diese im Ablauf der Herstellung des Getriebeschaltelements bisher nach dem Schweißvorgang angebracht werden, was die Freiheit bei der Gestaltung des Herstellungsablaufs einschränkt.

Aus der betrieblichen Praxis ist es alternativ auch bekannt, ein Getriebeschaltelement als einstückiges Feingußteil herzustellen. Ein solches Feingußteil vermeidet zwar einen Teil der vorstehend dargelegten Nachteile, jedoch stehen dem ein hoher Herstellungsaufwand und damit ein hoher Stückpreis als neue Nachteile gegenüber.

Aus DE 101 48 980 A1 ist ein Schaltarm aus Blech für das Übertragen von Schaltbewegungen bekannt. Ein derartiger Schaltarm ist fest an einem Schaltelement, wie Schaltwelle oder Schaltgabel, angeordnet. Bei diesem bekannten Schaltarm ist wesentlich, daß er ein aus dünnem Blech spannlos geformtes Umformteil ist. Damit sollen geringe Herstellungskosten und ein geringer Materialverbrauch für die Herstellung des Schaltarms erreicht werden. Der Schaltarm ist bevorzugt durch Schweißen an dem zugehörigen Schaltelement, wie Schaltstange oder Schaltgabel, befestigt. Das Verschweißen kann dabei durch Laserschweißen, Widerstandsschweißen oder Schutzgasschweißen erfolgen. Für die Verschweißung besitzt der Schaltarm bevorzugt wenigstens eine von dem Schaltarm abgewinkelte Lasche, wobei die Verschweißung mit dem zugehörigen Schaltelement an der Lasche erfolgt. Konkretere Angaben über die Art und Weise der Verschweißung werden nicht gemacht.

Als nachteilig wird bei diesem bekannten Stand der Technik angesehen, daß die Dauerhaltbarkeit bei hoher Belastung in einem Schaltgetriebe mit vielen Schaltvorgängen nicht gewährleistet ist, weil für den Schaltarm ein dünnes Blech verwendet wird. Auch die Schweißverbindung zwischen dem Schaltarm und dem zugehörigem Schaltelement, wie Schaltwelle oder Schaltgabel, stellt eine potentielle Schwachstelle des Bauteils da.

Aus DE 199 43 752 C1 ist eine Fügestelle für laserverschweißte Bauteile bekannt, wobei die Bauteile dünnwandig und unter Wärmeeinwirkung verzugsempfindlich sind und mit einer Beschichtung, insbesondere Verzinkung, versehen sind. Diese bekannte Fügestelle weist quer zur Überlappnaht verlaufene Entgasungskanäle für die beim Schweißprozeß entstehenden Beschichtungsdämpfe auf, wobei sich die Entgasungskanäle bis zum Rand des gegenseitigen Überlappungsbereichs der Bauteile erstrecken. Die Entgasungskanäle sind beidseitig nach außen geöffnet, wobei die vom Laserstrahl erzeugte Überlappnaht an den einzelnen Entgasungskanälen unterbrochen ist und somit eine Folge von diskreten Schweißnaht-Teilstücken bildet.

Nachteilig ist hier der Aufwand für die Herstellung der Fügestelle relativ hoch, weil vorab schon Entgasungskanäle in mindestens eines der beiden miteinander zu verschweißenden Bauteile eingeformt werden müssen. Außerdem ist die Schweißnaht in eine Folge von diskreten Schweißnaht- Teilstücken aufgeteilt, was zum einen den Schweißvorgang aufwendiger macht und zum anderen zu einer verminderten Belastbarkeit der Fügestelle insgesamt führt, was nur durch eine Vergrößerung der Zahl der Schweißnähte ausgeglichen werden kann. Da für Getriebeschaltelemente unbeschichtete Metallteile verwendet werden und weil bei Getriebeschaltelementen eine besonders hohe und zuverlässige Festigkeit der Fügestelle zwischen dem Schienenteil und dem Gabelteil gefordert wird, ist dieses bekannte Fügeverfahren für die Herstellung von Getriebeschaltelementen nicht geeignet.

Aus DE 43 41 255 C2 ist ein Verfahren zum Laserstrahlschweißen von Bauteilen bekannt. Bei diesem Verfahren weist eines der beiden zu verschweißenden Bauteile im Bereich ihrer späteren gemeinsamen Schweißnaht einen Materialüberstand auf, welcher unter Bildung der Schweißnaht aufgeschmolzen und als Schweißnahtauffüllung verwendet wird. Dabei wird mit dem schweißenden Laserstrahl außerhalb des Fügespaltes Basiswerkstoff aus dem Materialüberstand aufgeschmolzen. Das aufgeschmolzene Material gelangt durch Kapillarwirkung in den Fügespalt, wo es als Zusatzwerkstoff zur Füllung der Schweißnaht dient. Weiterhin wird bei dem Verfahren der schweißende Laserstrahl teilweise reflektiert und der teilreflektierte Laserstrahl wird in den Fügespalt umgelenkt. Der Laserstrahl wird mit seiner Achse außerhalb des Fügespaltes auf die Oberfläche des Materialüberstandes gerichtet. Die Achse des Laserstrahls schließt dabei mit der Oberfläche des Materialüberstandes einen Winkel kleiner als 30°, insbesondere zwischen 8° und 12°, ein. Das aus dieser überstehenden Oberfläche aufgeschmolzene Basismaterial wird mittels eines Arbeitsgases in den Fügespalt transportiert.

Dieses bekannte Verfahren ist ersichtlich sehr aufwendig und erfordert die Einhaltung von exakten Randbedingungen, wie insbesondere die Einstellung eines bestimmten, geringen Abstandes zwischen den beiden zu verschweißenden Bauteilen, um die Kapilarwirkung im Fügespalt zu gewährleisten. Außerdem muß der Laserstrahl, begleitet von einem Gasstrahl, mit einer sehr exakten Ausrichtung relativ zu den zu verschweißenden Bauteilen bewegt werden, was eine aufwendige Vorrichtung für den Schweißvorgang erfordert. Deshalb ist ein Einsatz dieses bekannten Laserschweißverfahrens teuer und damit für eine kostengünstige Massenfertigung von Getriebeschaltelementen nicht geeignet.

Für die vorliegende Erfindung stellt sich deshalb die Aufgabe, ein Verfahren der eingangs genannten Art zu schaffen, das die vorstehend angegebenen Nachteile vermeidet und mit dem ein Getriebeschaltelement aus Metall mit einem geringen Herstellungsaufwand und damit zu geringen Herstellungskosten herstellbar ist, wobei das Getriebeschaltelement ohne nachträgliches Richten und ohne nachträgliche Oberflächennachbehandlung sowie unter Ausschluß einer Schädigung von gegebenenfalls schon vorhandenen Klebeverbindungen herstellbar sein soll.

Die Lösung dieser Aufgabe gelingt erfindungsgemäß mit einem Verfahren gemäß Anspruch 1.

Durch das Herstellen von Schienenteil und Gabelteil als Feinschneidteile aus Stahldickblech erhalten diese Teile eine hohe Maßgenauigkeit, ohne daß eine Nachbearbeitung erforderlich ist. Die erfindungsgemäß vorgesehene Überlappnaht, die durch Laserschweißen erzeugt wird, sorgt auf der einen Seite für eine sehr zuverlässige und dauerhaft sichere Verbindung der Teile miteinander und auf der anderen Seite für eine geringe Wärmebelastung des Getriebeschaltelements. Damit wird ein unerwünschter Wärmeverzug, der zu Maß- und Formabweichungen führt, vermieden. Schweißspritzer oder -krater können bei diesem erfindungsgemäßen Schweißverfahren nicht mehr auftreten, so daß das Getriebeschaltelement eine saubere Oberfläche behält. Die geringe Wärmebelastung beim Laserschweißen sorgt außerdem dafür, daß gegebenenfalls vorhandene, vorab angebrachte Klebeverbindungen keine Schädigung durch thermischen Einfluß erfahren. Damit ist die Herstellung des Getriebeschaltelements vorteilhaft einfach und kostengünstig, wobei gleichzeitig aber ein besonders haltbares und hoch belastbares Getriebeschaltelement geschaffen wird. Ein nach dem erfindungsgemäßen Verfahren hergestelltes Getriebeschaltelement ist, wie Belastungsversuche ergeben haben, auch nach Hunderttausenden von Bewegungsspielen, wie sie bei Schaltvorgängen in einem Schaltgetriebe z.B. eines Kraftfahrzeuges über dessen Lebensdauer auftreten, im Bereich seiner Schweißverbindung unbeschädigt. Somit wird eine besonders hohe Zuverlässigkeit erreicht, die bisher überhaupt nicht oder nur mit Getriebeschaltelementen erzielt werden konnte, die in ihrer Herstellung wesentlich aufwendiger und teurer waren. Damit ist ein nach dem erfindungsgemäßen Verfahren hergestelltes Getriebeschaltelement besonders für die Verwendung in einem Direktschaltgetriebe geeignet, das mit zwei Kupplungen und ohne Wandlerstufe arbeitet.

In weiterer Ausgestaltung des erfindungsgemäßen Verfahrens ist vorgesehen, daß der Schienenteil und der Gabelteil durch eine einzige Überlappnaht miteinander verbunden werden, wobei die Überlappnaht mit einem ununterbrochenen Verlauf erzeugt wird, der eine ein- oder mehrfach gebogene oder abgewinkelte Linie bildet. Diese Ausführung der Überlappnaht sorgt für einen besonders festen und dauerhaften Zusammenhalt der miteinander verschweißten Teile, wobei die Schweißverbindung in verschiedenen Richtungen hoch belastbar ist.

Eine konkrete Weiterbildung schlägt vor, daß die Überlappnaht mit einem Verlauf hergestellt wird, der eine offene Linie mit einem Anfangspunkt und einem davon beabstandeten Endpunkt bildet. Mit einer solchen Form der Überlappnaht werden abgeschlossene Hohlräume, die eine Quelle für Korrosionsvorgänge bilden könnten, vermieden.

Bevorzugt wird dabei die Überlappnaht mit einem im wesentlichen U- oder V- oder W-förmigen Verlauf hergestellt. Alle genannten Nahtformen bieten den Vorteil, daß die Naht in verschiedenen Richtungen gleichmäßig oder annähernd gleichmäßig hoch belastbar wird und daß es keine ausgeprägte Vorzugsrichtung bei der Belastbarkeit gibt.

Alternativ wird vorgeschlagen, daß die Überlappnaht mit einem Verlauf hergestellt wird, der eine geschlossene Linie mit einem zusammenfallenden Anfangspunkt und Endpunkt bildet. Eine solche Überlappnaht bietet aufgrund ihrer geschlossenen Linie eine besonders stabile Schweißverbindung, die keine Anfangs- und Endbereiche aufweist, die möglicherweise einen Angriffspunkt für eine Ermüdungsbeschädigung der Schweißnaht im Einsatz des Getriebeschaltelements bilden könnten.

In weiterer Ausgestaltung ist dabei bevorzugt vorgesehen, daß die Überlappnaht mit einem kreis- oder oval- oder ellipsenförmigen oder gerundet mehreckförmigen Verlauf hergestellt wird. Auch mit diesen angegebenen Verläufen der Überlappnaht wird eine in verschiedenen Richtungen gleichmäßig oder annähernd gleichmäßig hohe Belastbarkeit der Schweißnaht gewährleistet.

Gemäß der Erfindung wird der Schienenteil einstückig mit einer Lasche hergestellt, die eine den schienenteilseitigen Verbindungsbereich bildende Fläche aufweist, und daß der Gabelteil mit einem zwei Gabelschenkel einstückig verbindenden Rückenteil hergestellt wird, der eine den gabelteilseitigen Verbindungsbereich bildende Fläche aufweist. In dieser Ausgestaltung werden die für die Anbringung der Schweißnaht erforderlichen Verbindungsbereiche an Schienenteil und Gabelteil vorteilhaft in diese integriert. Gleichzeitig wird nur eine Schweißverbindung pro Getriebeschaltelement benötigt, was die Herstellungszeit kurz hält.

In weiterer Ausgestaltung ist vorgesehen, daß bei einer Überlappnaht mit einem Verlauf in Form einer offenen Linie die Überlappnaht so gelegt wird, daß freie Enden der Überlappnaht in Richtung zu einem freien, vom übrigen Schienenteil weg weisenden Ende der Lasche weisen. Mit dieser Anordnung und Gestaltung der Überlappnaht wird eine den auftretenden mechanischen Belastungen optimal entsprechende Lage und Form der Überlappnaht erzielt, so daß überflüssige Schweißnahtbereiche vermieden werden, die den Herstellungsaufwand erhöhen würden, aber nicht zu einer merklichen Verbesserung der Stabilität der Verbindung beitragen würden.

Die Überlappnaht wird bevorzugt unter Durchschweißung des Schienenteils hergestellt. Diese Ausführung des Verfahrens hat den Vorteil, daß der Zugang zum Schweißbereich nicht durch die Gabelschenkel des Gabelteils behindert wird.

Eine besonders gute Festigkeit und Dauerhaltbarkeit der zuvor beschriebenen Schweißverbindung wird durch eine zweckentsprechend gewählte Materialpaarung von Schienenteil und Gabelteil gefördert. In dieser Hinsicht ist für das erfindungsgemäße Verfahren bevorzugt vorgesehen, daß der Schienenteil aus einem Stahlblech aus Borstahl und der Gabelteil aus einem Stahlblech aus Feinkornbaustahl hergestellt werden.

In konkreter Weiterbildung schlägt das Verfahren vor, daß vorzugsweise als Borstahl ein Stahl mit der Bezeichnung 27MnCrB5-2 und als Feinkornbaustahl ein Stahl mit der Bezeichnung S500MC verwendet wird. Diese Materialien erfüllen die gestellten Anforderungen in besonders guter Weise.

Wie weiter oben schon erwähnt, werden in dem erfindungsgemäßen Verfahren der Schienenteil und der Gabelteil als Feinschheidteile aus Stahldickblech zugeschnitten. Damit das aus diesen Teilen hergestellte Getriebeschaltelement die auftretenden mechanischen Belastungen schadlos und auch über eine ausreichend lange Einsatzdauer aufnehmen kann, werden bevorzugt der Schienenteil und der Gabelteil mit einer Dicke zwischen 4 und 8 mm, vorzugsweise zwischen 5 und 7 mm, hergestellt. Dabei ist es für den Fachmann überraschend möglich, mit dem erfindungsgemäßen Verfahren auch bei derart dicken Blechen zwischen diesen die gewünschte Verbindung mittels Laserschweißens in Form einer die Fügeebene der Teile durchsetzenden Überlappnaht zu erzeugen.

Eine besonders gute Festigkeit und Dauerhaltbarkeit der Schweißverbindung wird erzielt, wenn, wie erfindungsgemäß bevorzugt vorgesehen ist, die Überlappnaht mit einer auf der freien Oberfläche des durchschweißten Schienenteils gemessenen Breite erzeugt wird, die zwischen etwa 50 und 100% der Dicke des Schienenteils beträgt.

Eine weitere Maßnahme zur Erzielung einer besonders guten Qualität der Schweißverbindung besteht erfindungsgemäß noch darin, daß vorzugsweise die Überlappnaht mit einer Einbrenntiefe in dem nicht durchschweißten Gabelteil erzeugt wird, die zwischen etwa 20 und 50% der Dicke des Gabelteils entspricht.

Im folgenden wird das erfindungsgemäße Verfahren anhand einer Zeichnung erläutert. Die Figuren der Zeichnung zeigen:
- Figur 1: ein Getriebeschaltelement, bestehend aus einem Schienenteil und einem damit durch eine Überlappnaht verschweißten Gabelteil, in perspektivischer Ansicht,
- Figur 2: das Getriebeschaltelement aus Figur 1 in Draufsicht,
- Figur 3: das Getriebeschaltelement aus Figur 1 in Stirnansicht,
- Figur 4: das Getriebeschaltelement aus Figur 1 in Seitenansicht,
- Figur 5 bis Figur 10: verschiedene Formen der Überlappnaht in Draufsicht und
- Figur 11: einen Schnitt durch die miteinander verbundenen Teile im Bereich der Überlappnaht in vergrößerter Darstellung.

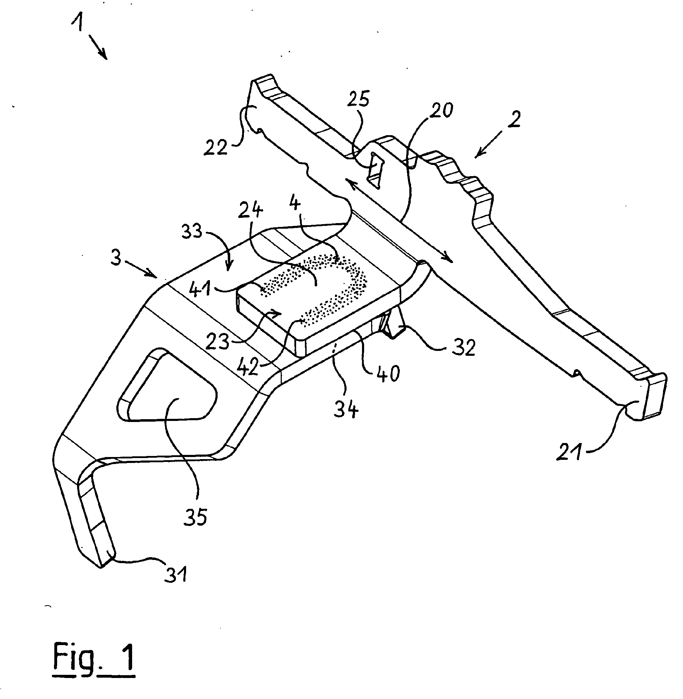

Gemäß Figur 1 besteht das dort dargestellte Getriebeschaltelement 1 aus einem Schienenteil 2 und einem Gabelteil 3. Der Schienenteil 2 und der Gabelteil 3 sind miteinander durch eine Überlappnaht 4, die durch Laserschweißen erzeugt ist, verbunden.

Der Schienenteil 2 hat eine langgestreckte Grundform mit zwei freien Enden 21, 22 und dient zur Führung des Getriebeschaltelements 1 innerhalb eines nicht dargestellten Getriebes. Entlang einer im Getriebe vorgesehenen Führungseinrichtung ist das Getriebeschaltelement 1 in Richtung des Bewegungspfeils 20 hin und her verschiebbar. Entsprechend der Verschiebung werden durch den Gabelteil 3 drehmomentübertragende Teile des Getriebes geschaltet.

Vom mittleren Bereich des Schienenteils 2 geht von dessen Unterseite eine gemäß Figur 1 annähernd rechtwinklig nach links hin abgebogene Lasche 23 aus, die einen flächigen Verbindungsbereich 24 bildet.

Im Bereich rechts oberhalb der Lasche 23 besitzt der Schienenteil 2 eine Durchbrechung 25, die zur Verbindung mit einem weiteren, hier nicht dargestellten Teil des Getriebeschaltelements dient. Bei diesem Teil kann es sich beispielsweise um einen Arm handeln, der an seinem freien Ende einen Magneten für eine elektronische Positionsdetektion des Getriebeschaltelements 1 trägt.

Der Gabelteil 3 ist im wesentlichen U-förmig und besitzt zwei Gabelschenkel 31, 32, die über ein Rückenteil 33 einstückig miteinander verbunden sind. Der Rückenteil 33 bildet oberseitig einen ebenen Flächenbereich, der hier einen Verbindungsbereich 34 als Gegenstück zum Verbindungsbereich 24 des Schienenteils 2 bildet.

In ihren Verbindungsbereichen 24, 34 liegen der Schienenteil 2 und der Gabelteil 3 aneinander an. Bei der Herstellung des Getriebeschaltelements 1 werden die vorgefertigten Teile, nämlich der Schienenteil 2 und der Gabelteil 3 in der in Figur 1 sichtbaren Position relativ zueinander fixiert. In diesem fixierten Zustand wird dann durch Laserschweißen die Überlappnaht 4 erzeugt, die den Schienenteil 2 durchsetzt und durch die Fügeebene 40 zwischen Schienenteil 2 und Gabelteil 3 hindurch bis in den Gabelteil 3 hineinreicht.

Wie die Figur 1 veranschaulicht, verläuft die Überlappnaht 4 im dargestellten Beispiel in Form eines U, dessen freie Enden 41, 42 einen Anfangspunkt und einen Endpunkt der Überlappnaht 4 bilden. Die U-Schenkel der Überlappnaht 4 weisen dabei in eine vom Schienenteil 2 weg weisende Richtung. Die Überlappnaht 4 verbindet den Schienenteil 2 und den Gabelteil 3 so miteinander, daß die Verbindung allen im Einsatz des Getriebeschaltelements 1 auftretenden Belastungen dauerhaft schadlos standhält.

Schließlich zeigt die Figur 1 im Gabelteil 3 noch eine Aussparung 35 im Übergangsbereich vom Gabelschenkel 31 zum Rückenteil 33, die zur Gewichtseinsparung dient.

Sowohl der Schienenteil 2 als auch der Gabelteil 3 werden zunächst als separate Teile in Form von Feinschneidteilen aus Dickblech hergestellt und durch Biegen oder Pressen weiter in ihre in Figur 1 sichtbare Form gebracht. Durch die Herstellung der Teile 2, 3 als Feinschneidteile ist eine nachträgliche Kanten- oder Oberflächenbearbeitung nicht mehr erforderlich.

Die Verbindung von Schienenteil 2 und Gabelteil 3 durch die im Laserstrahl-Durchschweißverfahren erzeugte Überlappnaht 4 belastet die Teile 2, 3 thermisch so wenig, daß es nicht zu einem Wärmeverzug der Teile 2, 3 und damit des Getriebeschaltelements 1 kommt. Ein aufwendiges mechanisches Richten nach dem Schweißen wird so vermieden. Auch werden durch das Laserschweißen störende Schweißkrater oder Schweißperlen auf der Oberfläche des Getriebeschaltelements 1, die ansonsten durch nachträgliche Bearbeitung entfernt werden müßten, vermieden.

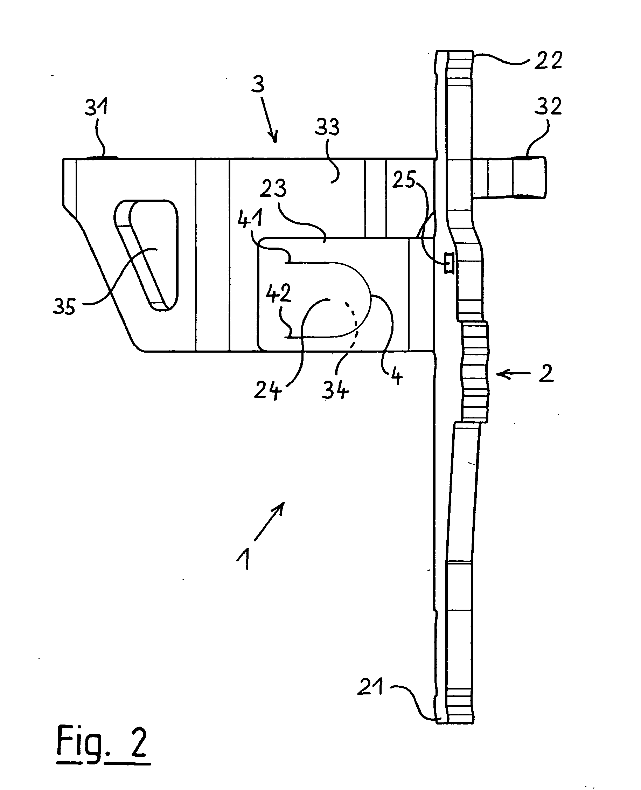

Figur 2 zeigt das Getriebeschaltelement 1 aus Figur 1 nun in Draufsicht. Rechts in Figur 2 ist der Schienenteil 2 mit seinen freien Enden 21, 22 und der Durchbrechung 25 erkennbar. Nach links hin erstreckt sich vom Schienenteil 2 ausgehend einstückig mit diesem dessen Lasche 23. Im Bereich der Lasche 23 befindet sich der Verbindungsbereich 24, in dem die Überlappnaht 4 verläuft.

Unterhalb der Lasche 23 liegt der Gabelteil 3 mit seinen beiden Gabelschenkeln 31, 32 und dem diese einstückig verbindenden Rückenteil 33. Im Rückenteil 33 liegt als Gegenstück zum Verbindungsbereich 24 des Schienenteils 2 der Verbindungsbereich 34 des Gabelteils 3. Die Überlappnaht 4 durchdringt den Verbindungsbereich 24 des Schienenteils 2 und verläuft bis in den Verbindungsbereich 34 des Gabelteils 3, wodurch der Schienenteil 2 und der Gabelteil 3 miteinander verbunden werden. Auch aus Figur 2 wird die U-Form des Verlaufs der Überlappnaht 4 mit den freien Enden 41, 42 sichtbar.

Ganz links in Figur 2 ist schließlich noch im Übergangsbereich vom Gabelschenkel 31 zum Rückenteil 33 die Aussparung 35 erkennbar.

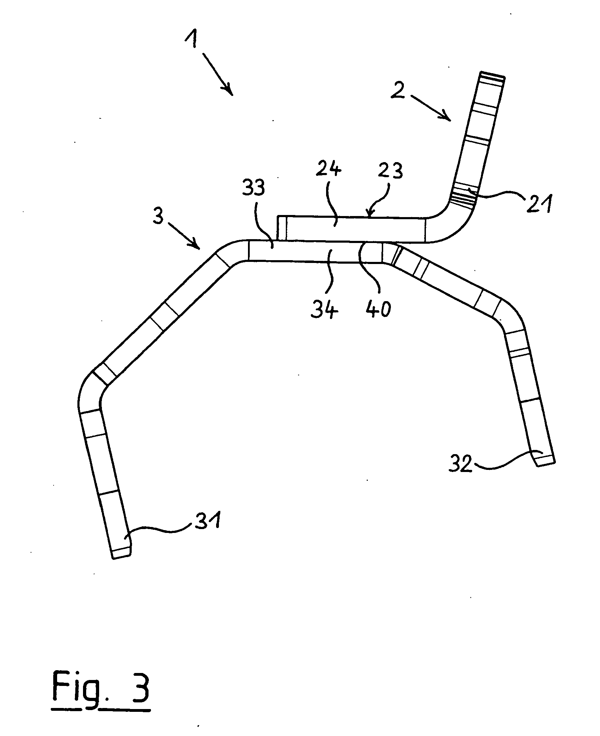

Figur 3 zeigt das Getriebeschaltelement 1 aus Figur 1 in einer Stirnansicht. Oben in Figur 1 liegt der Schienenteil 2, wobei hier dessen freies Ende 21 dem Betrachter zugewandt ist. Den linken unteren Teil des Schienenteils 2 bildet dessen Lasche 23 mit dem Verbindungsbereich 24.

Im unteren Teil der Figur 3 liegt der Gabelteil 3 mit seinen Gabelschenkeln 31, 32 und dem diese verbindenden Rückenteil 33. Im Rückenteil 33 ist der Verbindungsbereich 34 ausgebildet. In ihren Verbindungsbereichen 24, 34 liegen der Schienenteil 2 und der Gabelteil 3 in der Fügeebene 40 aneinander an und sind durch die hier nicht sichtbare Überlappnaht miteinander verbunden.

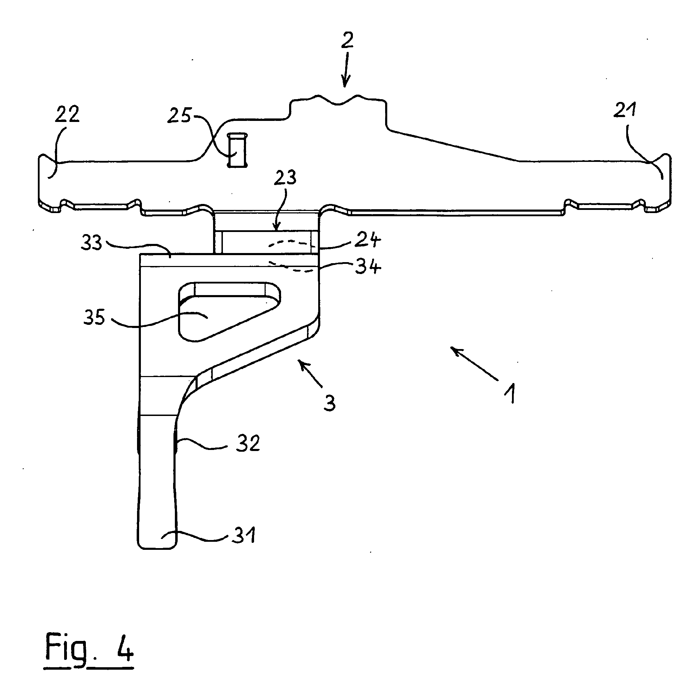

Figur 4 zeigt das Getriebeschaltelement 1 aus Figur 1 in einer Seitenansicht. Oben in Figur 4 ist der Schienenteil 2 mit seinen freien Enden 21, 22 und seiner Durchbrechung 25 sichtbar. Die mit dem Schienenteil 2 einstückig verbundene Lasche 23 mit dem Verbindungsbereich 24 weist hier auf den Betrachter zu.

Im unteren Teil der Figur 4 liegt der Gabelteil 3. Dessen in Figur 4 vorderer Gabelschenkel 31 verdeckt den im Hintergrund liegenden zweiten Gabelschenkel 32 größtenteils. Den oberen Teil des Gabelteils 3 bildet in Figur 4 der Rückenteil 33, der den Verbindungsbereich 34 zur Verbindung mit dem Schienenteil 2 aufweist. Schließlich ist auch in Figur 4 die Aussparung 35 sichtbar.

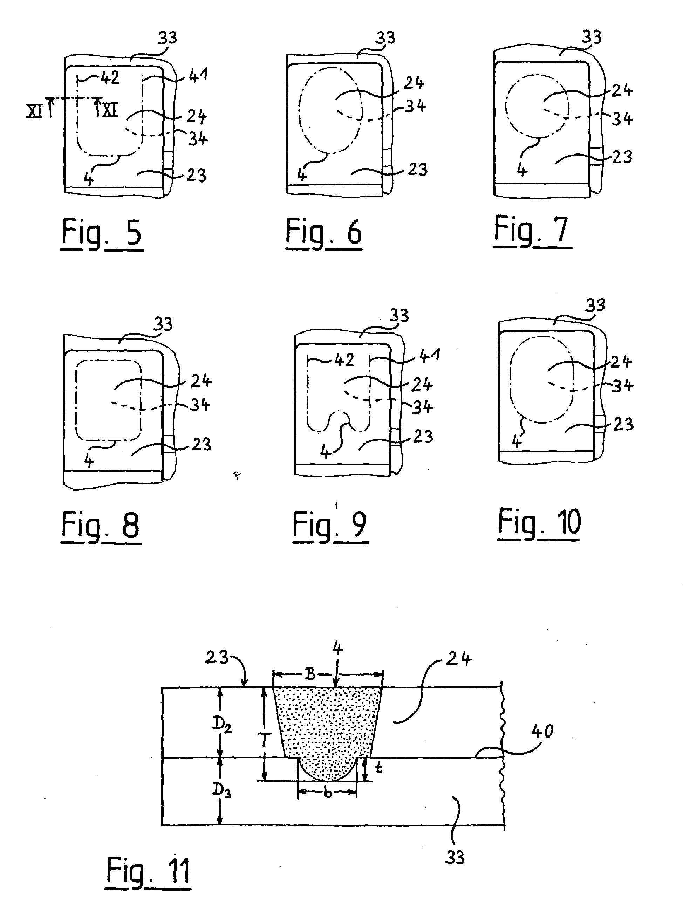

Die Figuren 5 bis 10 zeigen verschiedene vorteilhafte Ausführungen der Überlappnaht 4 anhand von in jeweils einem Ausschnitt dargestellten Draufsichten auf die Verbindungsbereiche 24, 34 von Schienenteil 2 und Gabelteil 3. Dabei liegt jeweils in den Figuren 5 bis 10 die Lasche 23 des Schienenteils 2 mit dem Verbindungsbereich 24 an der dem Betrachter zugewandten Oberseite. Jeweils darunter liegt der Rückenteil 33 mit dem Verbindungsbereich 34 des Gabelteils 3.

Bei dem Beispiel gemäß Figur 5 verläuft die Überlappnaht 4 in Form eines U, wobei die Kurven des U hier mit einem im Vergleich zu dem Ausführungsbeispiel gemäß den Figuren 1 bis 4 etwas kleineren Radius ausgeführt sind. Die freien Enden 41, 42 der Überlappnaht 4 weisen in Richtung zum freien Ende der Lasche 23, also vom hier nicht sichtbaren übrigen Schienenteil 2 weg.

Bei dem Beispiel gemäß Figur 6 verläuft die Überlappnaht 4 entlang einer Ellipse, bildet also eine geschlossene Form. Die längere Achse der Ellipse verläuft dabei in Längsrichtung der Lasche 23, also in einer Richtung, die etwa senkrecht zur Längsrichtung des übrigen Schienenteils 2 verläuft.

Bei dem Beispiel gemäß Figur 7 verläuft die Überlappnaht 4 entlang eines Kreises, also ohne jegliche Vorzugsrichtung.

Im Beispiel gemäß Figur 8 beschreibt die Überlappnaht 4 einen rechteckigen Verlauf mit abgerundeten Ecken, wobei auch hier wieder die längeren Seiten des Rechtecks in Längsrichtung der Lasche 23, gemäß Zeichnung also von oben nach unten, verlaufen.

In Figur 9 ist ein Beispiel der Überlappnaht 4 gezeigt, deren Verlauf etwa die Form eines W beschreibt. Die seitlichen W-Schenkel verlaufen dabei wieder in Längsrichtung der Lasche 23, wobei die freien Enden 41, 42 der Überlappnaht 4 in Richtung zum freien Ende der Lasche 23 weisen.

Im Beispiel gemäß Figur 10 beschreibt die Überlappnaht 4 in ihrem Verlauf ein Oval, dessen längere Achse wieder in Längsrichtung der Lasche 23 verläuft.

Figur 11 schließlich zeigt einen Schnitt entlang der Linie XI-XI in Figur 5 durch die Verbindungsbereiche 24, 34 mit der diese Bereiche verbindenden Überlappnaht 4.

Wie die Figur 11 veranschaulicht, liegt oben der Verbindungsbereich 24, der in der Lasche 23 des im übrigen nicht dargestellten Schienenteils 2 liegt. Unten liegt der Rückenteil 33 mit dem Verbindungsbereich 34 des hier im übrigen ebenfalls nicht dargestellten Gabelteils 3. Die Fläche, in der die Verbindungsbereiche 24, 34 aneinander anliegen, bildet die Fügeebene 40.

Die Überlappnaht 4 wird durch Laserschweißen erzeugt, wobei der Laserstrahl von oben her auf die Oberseite des oben liegenden Verbindungsbereichs 24 auftrifft. Durch den Laserstrahl wird das Material im Verbindungsbereich 24 über seine gesamte Dicke D₂ zum Schmelzen gebracht. Dabei pflanzt sich die Schmelzzone bis in eine Einbrenntiefe t auch in den oberen Teil des Verbindungsbereichs 34 des Rückenteils 33 fort. Die Tiefe t beträgt im dargestellten Beispiel etwa 35% der Gesamtdicke D₃ des Verbindungsbereichs 34 im Rückenteil 33.

An der Oberseite des Verbindungsbereichs 24 der Lasche 23 hat die Überlappnaht 4 eine maximale Breite B. Diese Breite reduziert sich bis zur Oberseite des Verbindungsbereichs 34 des Rückenteils 33, also bis zur Fügeebene 40, auf eine Breite b, die hier etwa 50% der maximalen, oberseitigen Breite B der Überlappnaht 4 beträgt. Für den Schweißvorgang wird die Breite B so groß gewählt, daß sich in jedem Fall eine ausreichend große Breite b und damit eine ausreichend haltbare und belastbare Schweißverbindung in der Fügeebene 40 ergibt.

Die Gesamttiefe der Überlappnaht 4 hat das Maß T. Das Maß dieser Tiefe T setzt sich zusammen aus der Dicke D₂ der Lasche 23 zuzüglich der Einbrenntiefe t im Rückenteil 33. In der praktischen Anwendung liegen bevorzugt die Dicken D₂ und D₃ jeweils zwischen etwa 4 und 8 mm.

Das Material ist für den Schienenteil 2 und für den Gabelteil 3 jeweils ein spezielles Stahlblech, das einerseits dafür geeignet ist, die Teile als Dickblech-Feinschneidteile herzustellen, und das andererseits eine qualitativ hochwertige Schweißverbindung mittels Laserstrahl-Durchschweißens in der vorstehend beschriebenen Weise erlaubt.

## Patentansprüche

1. Verfahren zur Herstellung eines Getriebeschaltelements (1) aus Metall, insbesondere für ein Direktschaltgetriebe eines Kraftfahrzeuges, wobei das Getriebeschaltelement (1) zumindest einen Schienenteil (2) und einen Gabelteil (3) umfaßt, die einzeln hergestellt und dann miteinander verschweißt werden, wobei im in ein Getriebe eingebauten Zustand des Getriebeschaltelements (1) der Schienenteil (2) das Getriebeschaltelement (1) in Schienenteillängsrichtung beweglich führt und mit Schaltkräften zur Erzeugung von Schaltbewegungen beaufschlagt wird und wobei der Gabelteil (3) die Schaltbewegungen auf drehmomentübertragende Elemente des Getriebes überträgt, wobei der Schienenteil (2) und der Gabelteil (3) als Feinschneidteile aus Stahldickblech zugeschnitten und durch Biegen und/oder Pressen weiter geformt werden, und mittels Laserschweißen miteinander verbunden werden,
**dadurch gekennzeichnet,**
- **daß** der Schienenteil (2) einstückig mit einer Lasche (23) hergestellt wird, wobei der Schienenteil (2) und der Gabelteil (3) jeweils mit einem sich überlappenden, flächigen Verbindungsbereich (24, 34) ausgebildet werden, wobei die Lasche (23) eine den schienenteilseitigen Verbindungsbereich (24) bildende Fläche aufweist, und daß der Gabelteil (3) mit einem zwei Gabelschenkel (31, 32) einstückig verbindenden Rückenteil (33) hergestellt wird, der eine den gabelteilseitigen Verbindungsbereich (34) bildende Fläche aufweist,
- **daß** der Schienenteil (2) und der Gabelteil (3) in ihrer Soll-Position relativ zueinander mit einander überlappenden, in einer Fügeebene (40) aufeinander liegenden Verbindungsbereichen (24, 34) positioniert und fixiert werden und
- **daß** der Schienenteil (2) und der Gabelteil (3) in ihren einander überlappenden Verbindungsbereichen (24, 34) durch mindestens eine durch Laserschweißen erzeugte, die Fügeebene (40) durchsetzende Überlappnaht (4) miteinander verbunden werden.

2. Verfahren nach Anspruch 1, **dadurch gekennzeichnet, daß** der Schienenteil (2) und der Gabelteil (3) durch eine einzige Überlappnaht (4) miteinander verbunden werden, wobei die Überlappnaht (4) mit einem ununterbrochenen Verlauf erzeugt wird, der eine ein- oder mehrfach gebogene oder abgewinkelte Linie bildet.

3. Verfahren nach Anspruch 2, **dadurch gekennzeichnet, daß** die Überlappnaht (4) mit einem Verlauf hergestellt wird, der eine offene Linie mit einem Anfangspunkt (41) und einem davon beabstandeten Endpunkt (42) bildet.

4. Verfahren nach Anspruch 3, **dadurch gekennzeichnet, daß** die Überlappnaht (4) mit einem im wesentlichen U- oder V- oder W-förmigen Verlauf hergestellt wird.

5. Verfahren nach Anspruch 3 oder 4, **dadurch gekennzeichnet, daß** bei einer Überlappnaht (4) mit einem Verlauf in Form einer offenen Linie die Überlappnaht (4) so gelegt wird, daß freie Enden (41, 42) der Überlappnaht (4) in Richtung zu einem freien, vom übrigen Schienenteil (2) weg weisenden Ende der Lasche (23) weisen.

6. Verfahren nach Anspruch 2, **dadurch gekennzeichnet, daß** die Überlappnaht (4) mit einem Verlauf hergestellt wird, der eine geschlossene Linie mit einem zusammenfallenden Anfangspunkt und Endpunkt bildet.

7. Verfahren nach Anspruch 6, **dadurch gekennzeichnet, daß** die Überlappnaht (4) mit einem kreis- oder oval- oder ellipsenförmigen oder gerundet mehreckförmigen Verlauf hergestellt wird.

8. Verfahren nach einem der vorhergehenden Ansprüche, **dadurch gekennzeichnet, daß** die Überlappnaht (4) unter Durchschweißung des Schienenteils (2) hergestellt wird.

9. Verfahren nach Anspruch 8, **dadurch gekennzeichnet, daß** der Schienenteil (2) aus einem Stahlblech aus Borstahl und der Gabelteil (3) aus einem Stahlblech aus Feinkornbaustahl hergestellt werden.

10. Verfahren nach Anspruch 9, **dadurch gekennzeichnet, daß** als Borstahl ein Stahl mit der Bezeichnung 27MnCrB5-2 und als Feinkornbaustahl ein Stahl mit der Bezeichnung S5O0MC verwendet wird.

11. Verfahren nach einem der vorhergehenden Ansprüche, **dadurch gekennzeichnet, daß** der Schienenteil (2) und der Gabelteil (3) mit einer Dicke zwischen 4 und 8 mm, vorzugsweise zwischen 5 und 7 mm, hergestellt werden.

12. Verfahren nach einem der Ansprüche 8 bis 11 **dadurch gekennzeichnet, daß** die Überlappnaht (4) mit einer auf der freien Oberfläche des durchschweißten Schienenteils (2) gemessenen Breite (B) erzeugt wird, die zwischen etwa 50 und 100% der Dicke (D) des Schienenteils (2) beträgt.

13. Verfahren nach einem der vorhergehenden Ansprüche, **dadurch gekennzeichnet, daß** die Überlappnaht (4) mit einer Einbrenntiefe (t) in dem nicht durchschweißten Gabelteil (3) erzeugt wird, die zwischen etwa 20 und 50% der Dicke (D) des Gabelteils (3) entspricht.

## Claims

1. Method for manufacturing a gear shifting element (1) of metal, especially for a direct gear shifting system of a motor vehicle, with the gear shifting element (1) comprising at least one rail part (2) and one fork part (3) which are individually manufactured and then welded together, with the rail part (2) - in the state of the gear shifting element (1) built into a gearbox - movably guiding the gear shifting element (1) in longitudinal direction of the rail part and shifting forces being applied to it for generating shifting movements and with the fork part (3) transmitting the shifting movements to the torque transmitting elements of the gearbox, with the rail part (2) and the fork part (3) being cut as fine cutting parts from heavy sheet steel and further shaped by bending and/or pressing and connected with each other by means of laser welding,
**characterized in that**
- the rail part (2) is manufactured of one piece with a butt strap (23), the rail part (2) and the fork part (3) each being designed with an overlapping, planar connecting area (24, 34), the butt strap (23) comprising a surface forming the connecting area (24) on the rail part side, and that the fork part (3) is manufactured with a back part (33) connecting two fork arms (31, 32) in one piece, the back part comprising a surface forming the connecting area (34) on the fork part side;
- the rail part (2) and the fork part (3) are positioned and fixed in their nominal position relative to each other, with overlapping connecting areas (24, 34) lying on top of each other in a joining plane (40); and
- the rail part (2) and the fork part (3) are connected with each other in their respectively overlapping connecting areas (24, 34) by at least one lap seam (4) produced by laser welding and pervading the joining plane (40).

2. Method according to claim 1, **characterized in that** the rail part (2) and the fork part (3) are connected with each other by a single lap seam (4), the lap seam (4) produced in an uninterrupted course which forms a line curved or bent once or several times.

3. Method according to claim 2, **characterized in that** the lap seam (4) is produced with a course which forms an open line with a starting point (41) and an end point (42) spaced apart from it.

4. Method according to claim 3, **characterized in that** the lap seam (4) is produced in an essentially U- or V- or W-shaped course.

5. Method according to claim 3 or 4, **characterized in that** in a lap seam (4) with a course in the form of an open line, the lap seam (4) is laid such that free ends (41, 42) of the lap seam (4) are oriented in the direction to a free end of the butt strap (23) which points away from the remaining rail part (2).

6. Method according to claim 2, **characterized in that** the lap seam (4) is produced with a course which forms a closed line with a starting point and end point coinciding.

7. Method according to claim 6, **characterized in that** the lap seam (4) is produced with a circular or oval or elliptical or rounded polygonal course.

8. Method according to any one of the preceding claims, **characterized in that** the lap seam (4) is produced by welding through the rail part (2).

9. Method according to claim 8, **characterized in that** the rail part (2) is manufactured of a steel plate of boron steel and the fork part (3) of a steel plate of fine-grained structural steel.

10. Method according to claim 9, **characterized in that** the boron steel used is a steel with the designation 27MnCrB5-2, and the fine-grained structural steel used is a steel with the designation S500MC.

11. Method according to any one of the preceding claims, **characterized in that** the rail part (2) and the fork part (3) are manufactured with a gauge of between 4 and 8 mm, preferably between 5 and 7 mm.

12. Method according to any one of the claims 8 to 11, **characterized in that** the lap seam (4) is produced with a width (B) measured on the free surface of the welded-through rail part (2), the width approximately being between 50 and 100% of the thickness (D) of the rail part (2).

13. Method according to any one of the preceding claims, **characterized in that** the lap seam (4) is produced with a burning-in depth (t) in the fork part (3) not welded through, the depth corresponding to approximately between 20 and 50% of the thickness (D) of the fork part (3).

## Revendications

1. Procédé de fabrication d'un élément de changement de vitesse (1) en métal, en particulier pour une boîte à engagements directs d'un véhicule automobile, l'élément de changement de vitesse (1) comprenant au moins une partie en rail (2) et une partie en fourche (3) qui sont fabriquées individuellement puis soudées ensemble, la partie en rail (2), à l'état de l'élément de changement de vitesse (1) monté dans une boîte de vitesses, guidant l'élément de changement de vitesse (1) de manière mobile dans le sens longitudinal de la partie en rail et étant soumis à des forces de changement de vitesse pour générer des mouvements de changement de vitesse et la partie en fourche (3) transmettant les mouvements de changement de vitesse à des éléments de la boîte de vitesses transmetteurs de couple, la partie en rail (2) et la partie en fourche (3) étant découpées en tant que pièces de coupe fine à partir d'une tôle épaisse d'acier et subissant un formage subséquent par flexion et/ou compression et étant assemblées entre elles au moyen d'un soudage par laser,
**caractérisé en ce que**
- la partie en rail (2) est fabriquée d'une seule pièce avec une languette (23), la partie en rail (2) et la partie en fourche (3) étant réalisées respectivement avec une zone d'assemblage (24, 34) plane en recouvrement, la languette (23) présentant une surface qui constitue la zone d'assemblage (24) côté partie en rail, et **en ce que** la partie en fourche (3) est fabriquée avec une partie dos (33) qui assemble en une seule pièce deux branches de fourche (31, 32), laquelle partie dos présente une surface qui constitue une zone d'assemblage (34) côté partie en fourche,
- la partie en rail (2) et la partie en fourche (3) sont positionnées et fixées dans leur position prescrite relativement l'une à l'autre avec des zones d'assemblage (24, 34) qui se recouvrent et se superposent dans un plan de jonction (40) et
- la partie en rail (2) et la partie en fourche (3) sont assemblées entre elles dans leurs zones d'assemblage (24, 34) qui se recouvrent par au moins une soudure à recouvrement (4) produite par un soudage au laser et traversant le plan de jonction (40).

2. Procédé selon la revendication 1, **caractérisé en ce que** la partie en rail (2) et la partie en fourche (3) sont assemblées entre elles par une unique soudure à recouvrement (4), la soudure à recouvrement (4) étant produite avec un tracé ininterrompu qui constitue une ligne courbe ou pliée angulairement une ou plusieurs fois.

3. Procédé selon la revendication 2, **caractérisé en ce que** la soudure à recouvrement (4) est produite avec un tracé qui constitue une ligne ouverte avec un point de départ (41) et un point final (42) qui est situé à une distance de celui-ci.

4. Procédé selon la revendication 3, **caractérisé en ce que** la soudure à recouvrement (4) est produite avec un tracé sensiblement en U ou en V ou en W.

5. Procédé selon la revendication 3 ou 4, **caractérisé en ce que**, étant donné une soudure à recouvrement (4) avec un tracé en forme de ligne ouverte, la soudure à recouvrement (4) est réalisée de manière telle que les extrémités libres (41, 42) de la soudure à recouvrement (4) sont orientées dans la direction d'une extrémité de la languette (23) libre orientée dans une autre direction que le reste de la partie en rail (2).

6. Procédé selon la revendication 2, **caractérisé en ce que** la soudure à recouvrement (4) est produite avec un tracé qui constitue une ligne fermée avec un point de départ et un point final qui coïncident.

7. Procédé selon la revendication 6, **caractérisé en ce que** la soudure à recouvrement (4) est produite avec un tracé circulaire ou ovale ou elliptique ou polygonal arrondi.

8. Procédé selon l'une des revendications précédentes, **caractérisé en ce que** la soudure à recouvrement (4) est produite par soudage à coeur de la partie en rail (2).

9. Procédé selon la revendication 8, **caractérisé en ce que** la partie en rail (2) est fabriquée à partir d'une tôle d'acier en acier au bore et la partie en fourche (3), à partir d'une tôle d'acier en acier de construction à grain fin.

10. Procédé selon la revendication 9, **caractérisé en ce qu'**on utilise, en tant qu'acier au bore, un acier désigné sous l'appellation 27MnCrB5-2 et, en tant qu'acier de construction à grain fin, un acier désigné sous l'appellation S500MC.

11. Procédé selon l'une des revendications précédentes, **caractérisé en ce que** la partie en rail (2) et la partie en fourche (3) sont fabriquées avec une épaisseur comprise entre 4 et 8 mm, et de préférence entre 5 et 7 mm.

12. Procédé selon l'une des revendications 8 à 11, **caractérisé en ce que** la soudure à recouvrement (4) est produite avec une largeur (B), mesurée sur la surface libre de la partie en rail (2) soudée à coeur, qui est entre environ 50 et 100 % de l'épaisseur (D) de la partie en rail (2).

13. Procédé selon l'une des revendications précédentes, **caractérisé en ce que** la soudure à recouvrement (4) est produite avec une profondeur de pénétration (t) dans la partie en fourche (3) non soudée à coeur qui est entre environ 20 et 50 % de l'épaisseur (D) de la partie en fourche (3).
